# EUROPÄISCHE PATENTSCHRIFT

(11) **EP 0 411 163 B1**
(45) Veröffentlichungstag und Bekanntmachung des Hinweises auf die Patenterteilung: **16.03.1994**
(21) Anmeldenummer: 89112372.1
(22) Anmeldetag: 06.07.1989
(51) Int. Cl.: B29C 47/68, B01D 29/33, B01D 29/64, B01D 29/94

(54) **Filtervorrichtung mit kontinuierlicher Reinigung der Filterfläche**
Filtering device providing continuous cleaning of the filtering surfaces
Dispositif filtrant à nettoyage continu des éléments filtrants

(43) Veröffentlichungstag der Anmeldung: 06.02.1991
(73) Patentinhaber: Barmashin, Evgeny Petrovich, Kiev (SU); Zverlin, Valery Grigorievich, Kiev (US); Voitushenko, Petr Alexandrovich, Kiev (US); Bakhtiyarov, Andrei Sergeevich, Kiev (US); Goncharenko, Vasily Maximovich, Kiev (UA); Dytynchuk, Sergei Anatolievich, Kiev (US)
(72) Erfinder: Barmashin, Evgeny Petrovich, Kiev (SU); Zverlin, Valery Grigorievich, Kiev (US); Voitushenko, Petr Alexandrovich, Kiev (US); Bakhtiyarov, Andrei Sergeevich, Kiev (US); Goncharenko, Vasily Maximovich, Kiev (UA); Dytynchuk, Sergei Anatolievich, Kiev (US)
(74) Vertreter: Nix, Frank Arnold, Dr.

(56) Entgegenhaltungen:
- EP-A- 0 164 004
- DE-A- 2 816 925
- FR-A- 2 334 399
- US-A- 3 739 915
- US-A- 4 057 379

## Beschreibung

Die vorliegende Erfindung bezieht sich auf das Gebiet des chemischen Maschinenbaues, insbesondere auf Filtervorrichtungen mit kontinuierlicher Reinigung der Filterfläche.

Die Erfindung kann in den technologischen Ausrüstungen der chemischen Industrie sowie anderer Industriezweige angewendet werden. Am zweckmässigsten ist ihre Anwendung in Extrusionsanlagen zur Filtration von Polymerlösungen und -schmelzen.

Die Reinigung der Schmelze des zu verarbeitenden Polymeren von unerwünschten Einschlüssen (Verunreinigungen, Metallteilchen, verkohlten Polymeren, Gelen) ist eines der auf dem Gebiet der Kunststoffverarbeitung vorhandenen wichtigen Probleme. Ihre Bedeutung wird durch solche Faktoren wie zunehmende Anforderungen an die Qualität von Erzeugnissen, notwendige Verarbeitung von Sekundärrohstoffen, Intensivierung von Extrusionsprozessen verstärkt. Die herkömmliche Lösung dieses Problems durch Anbringen eines Filternetzpaketŝ am Extruderausgang vor dem Eintritt in den Formungskopf bedingt die Notwendigkeit einer Unterbrechung des ablaufenden Prozesses zur Reinigung bzw. Auswechslung der Filternetze, und die Schaffung von Filtervorrichtungen mit Netzauswechslung ohne Unterbrechung des Prozesses erfordert die Lösung einer technisch schwierigen Aufgabe der Abdichtung ihrer beweglichen Verbindungen.

Eine weiterer wichtiger Aspekt des Problems der Gewährleistung der erforderlichen Qualität von Kunststofferzeugnissen ist die Erzielung der Homogenität der Schmelze hinsichtlich Zusammensetzung und/oder Temperatur.

Die Lösung der genannten Probleme setzt die Schaffung von Filtervorrichtungen zur Filtration der Schmelze ohne Unterbrechung des Extrusionsprozesses sowie eine Erhöhung der Effektivität der Vorrichtungen zur Homogenisierung der Schmelze voraus, wobei die Vereinigung von Filtrations- und Homogenisierungsprozessen in ein und derselben Einrichtung zweckmässig ist.

Es ist eine Filtervorrichtung zur Filtration eines Flüssigkeitsstromes, insbesondere einer Polymerstoffschmelze bekannt (US, A, Nr. 3817377), die ein Gehäuse mit einer Eintrittsöffnung und zwei Austrittsöffnungen enthält, wobei die Eintrittsöffnung und die erste Austrittsöffnung auf der Längsachse des Gehäuses liegen, während die zweite Austrittsöffnung im Gehäuse radial liegt. Im Gehäuse sind gleichachsig eine Verteilungsplatte, ein Rost und ein zwischen ihnen eingespanntes Filterelement angeordnet, das in Form eines Metallnetzes ausgeführt ist. Die Verteilungsplatte besitzt einen Radialkanal, der mit der zweiten Austrittsöffnung des Gehäuses in Verbindung steht. Die Oberflächen der Verteilungsplatten und des Filterelementes bilden einen Eintrittssammler, dessen Durchgangsquerschnitt in der Bewegungsrichtung des Materials abnimmt. Der Eintrittssammler ist an der Stelle, wo sein Durchgangsquerschnitt am grössten ist, mit der Eintrittsöffnung des Gehäuses in Verbindung gesetzt, an der Stelle aber, wo der Durchgangsquerschnitt des Eintrittssammlers am kleinsten ist, befindet sich in der Verteilungsplatte eine axiale Bohrung, die mit dem Radialkanal in Verbindung steht. Die Oberflächen des Rostes und der Gehäusewände bilden einen Austrittssammler, dessen Durchgangsquerschnittsfläche in der Bewegungsrichtung des Materials zunimmt. Der Austrittssammler ist an der Stelle, wo die Durchgangsquerschnittsfläche am grössten ist, mit der ersten Austrittsöffnung des Gehäuses in Verbindung gesetzt.

Während der Arbeit der Filtervorrichtung wird der Schmelzestrom von Eintrittssammler über die Oberfläche des Filterelementes verteilt, passiert dasselbe und gelangt über den Austrittssammler in die erste Austrittsöffnung. Die im Strom suspendierten festen Teilchen scheiden sich an der Oberfläche des Filterelementes ab. Dank der im Eintrittssammler vorhandenen Strömung, die gegen die axiale Bohrung in der Verteilungsplatte gerichtet ist und unmittelbar an der Filterelementoberfläche fliesst, werden die an derselben abgeschiedenen festen Teilchen zu dieser axialen Bohrung fortgetragen und über den Radialkanal in der Verteilungsplatte zur zweiten Austrittsöffnung des Gehäuses gemeinsam mit einer gewissen Polymerschmelzmenge abgeleitet. Dabei muss die Strömungsgeschwindigkeit an der Filterelementoberfläche ausreichend hoch zum Abspülen von Verunreinigungen durch entsprechende Dimensionierung der Eintritts- und Austrittsöffnungen aufrechterhalten werden. Jedoch sind bei der Arbeit dieser Filtervorrichtung erhebliche Verluste an zu verarbeitendem Polymer zu verzeichnen, dessen Strom das Abspülen von Verunreinigungen sowie das Ableiten derselben aus der Vorrichtung gewährleisten soll. Eine wesentliche Verringerung des Durchmessers der in der Verteilungsplatte der Vorrichtung vorhandenen und zum Abfluss des Absatzes bestimmten Bohrung zwecks Verminderung von Materialverlusten kann zur Verstopfung derselben führen. Da aber in der beschriebenen Filtervorrichtung keine Mittel zur zwangsweisen Entfernung des Absatzes von der Filterelementoberfläche vorgesehen sind, gewährleistet sie keine zuverlässige Entfernung sämtlicher Verunreinigungen und setzt demgemäss eine periodische Unterbrechung des Prozesses zur Reinigung der Filterfläche voraus, was die Arbeitsleistung der technologischen Ausrüstungen beträchtlich vermindert.

Bekannt ist eine Filtervorrichtung zur Filtration von unter Druck stehenden Flüssigkeiten (DE, C, 2502669), die ein Gehäuse, einen Trag- und einen Distanzrost, ein zwischen denselben befindliches Filterelement, das in Gestalt eines Netzes bzw. eines Netzpaketes ausgeführt ist, sowie ein hohles Schaberelement zur Entfernung von Verunreinigungen enthält, das in bezug auf die Oberfläche des Distanzrostes mit einem geringen Spalt angeordnet ist, der das Gleiten desselben an dieser Oberfläche gewährleistet. Das Schaberelement ist auf einer Welle befestigt, die eine axiale Bohrung aufweist, wobei die Welle durch das Gehäuse der Vorrichtung hindurchgeführt und mit einem Drehantrieb verbunden ist. Der im Schaberelement vorhandene Hohlraum ist auf der Seite des Distanzrostes offen und hat eine Form, die mit der Form der Zellen des Distanzrostes übereinstimmt.

Bei der Arbeit dieser Vorrichtung in der Betriebsart Filtration fliesst die Polymerschmelze durch die Öffnungen des Distanz- und des Tragrostes sowie durch das Filterelement hindurch, während sich die festen Einschlüsse an der Filterelementoberfläche absetzen, wobei sie die Zellen des Distanzrostes füllen. Bei der Arbeit der Vorrichtung in der Betriebsart Reinigung läuft das Schaberelement zusammen mit der Welle um, und sein Hohlraum wird im Wechsel mit den Zellen des Distanzrostes in Verbindung gesetzt. Dabei wird die jeweilige Zelle sowohl von den benachbarten Zellen des Distanz - rostes wie auch von der Schmelze im Innern des Gehäuses der Filtervorrichtung vor dem Filterelement in der Bewegungsrichtung des Materials isoliert. Da die Zelle in diesem Fall über den Hohlraum des Schaberelements und die axiale Bohrung der Welle mit der Umgebung in Verbindung steht, so fliesst die Schmelze unter der Wirkung des Druckgefälles zwischen dem Druck der Schmelze hinter dem Filterelement und dem Umgebungsdruck durch das Filterelement hindurch in der umgekehrten Richtung, spült die festen Einschlüsse aus der Zelle des Distanzrostes heraus und trägt dieselben durch die axiale Bohrung der Welle hindurch aus der Filtervorrichtung fort. Bei der Bewegung des Schaberelementes zu den nächstfolgenden Zellen wiederholt sich die Reinigungszyklus so lange, bis alle Zellen des Distanzrostes gereinigt worden sind. Somit weist diese Filtervorrichtung geringere Verluste an zu verarbeitendem Polymer auf und besitzt eine höhere Wirksamkeit beim Reinigen der Filterfläche vom Absatz dank Konzentrierung des spülenden Stroms in einzelnen Filterelementabschnitten. Allerdings sind unproduktive Polymerverluste beim Abfluss des Absatzes auch in dieser Vorrichtung recht hoch, was vor allem durch die Notwendigkeit der Erzeugung eines grösseren Rückstromes beim Spülen des Filterelementes für die Dauer einer Zeitspanne bedingt ist, die zum Ausspülen der Verunreinigungen aus den Zellen des Distanzrostes erforderlich ist, andererseits aber auf die Schmelzeverluste durch den Spalt zwischen dem Distanzrost und dem Schaberelement zurückzuführen ist. Zugleich können grössere Schmutzteilchen mit die Zellengrösse übersteigenden Massen in die Zelle nicht gelangen, und ihre Entfernung aus der Schmelze ist nur bei vollkommener Unterbrechung des Prozesses, Demontage und Reinigung der Oberfläche des Distanzrostes möglich.

Darüber hinaus ist in den beschriebenen Vorrichtungen das Problem der Homogenisierung der Polymerschmelze nicht gelöst, und die Erhöhung der Qualität des zu verarbeitenden Materials setzt die Anwendung von anderen Vorrichtungen voraus.

Es ist eine zur Filtration von Polymerschmelzen bestimmte Filtervorrichtung für einen Kunststoffextruder bekannt (FR, B, 1399683), die ein Gehäuse mit einer Eintrittsöffnung und einer Austrittsöffnung enthält, die von der Eintrittsöffnung in der Bewegungsrichtung des Materials entfernt liegt, wobei es mit dem Extrudergehäuse verbunden ist. Im Gehäuse der Filtervorrichtung ist gleichachsig mit der Längsachse derselben ein Filterelement angeordnet, das in Gestalt einer Hülse mit Löchern in deren filtrierender Seitenfläche ausgeführt ist, welche Hülse mit einem Dorn starr verbunden ist, der sich in der Gehäusestirn auf der Seite der Austrittsöffnung befindet. Im Innern der Hülse ist ein Schaberelement angebracht, das einen Einsatz mit Schraubengewinde darstellt, der mit der Extruderschnecke starr verbunden ist. Zwischen der Innenfläche der Hülse und dem Schraubengewindekamm des Einsatzes ist ein Spalt vorhanden, der die Drehung des letzteren ermöglicht.

Die zylindrische Aussenfläche der Hülse und die kegelige Oberfläche des Dornes bilden mit der zugeordneten Innenfläche des Gehäuses einen Ringraum, der mit der Austrittsöffnung in Verbindung steht. Die Stirnfläche des Einsatzes und die derselben zugekehrte Oberfläche des Dornes bilden einen Sammler zum Sammeln des Absatzes, und im Dorn sind auf der Seite des Einsatzes ein Axial- und ein Radialkanal zum Ableiten von Verunreinigungen ausgeführt, die den Sammler mit der Umgebung verbinden.

Bei der Arbeit der Vorrichtung gelangt die im Extruder vorbereitete Polymerschmelze in die Schraubenkanäle des rotierenden Einsatzes, wird bei ihrer Fortbewegung entlang der Hülsenachse durch die Löcher in der Filterfläche durchgedrückt und bewegt sich über den Ringraum zur Austrittsöffnung. Die die Schmelze verunreinigenden Einschlüsse setzen sich an der Innenfläche der Hülse ab und werden von den Windungen des Einsatzes an die Stirnseite derselben transportiert, wo sie sich gemeinsam mit einem Teil der Schmelze im Sammler ansammeln und dann über den Axial- und Radialkanal im Dorn aus der Vorrichtung abgeleitet werden.

Gleichzeitig mit der Filtration wird die Polymerschmelze dank Schubverformungen verrührt, die beim Fliessen der Schmelze im Schraubenkanal des Einsatzes sowie im Spalt zwischen dem Schraubengewindekamm und der filtrierenden Innenfläche der Hülse infolge der Zusammenwirkung des Materials mit der beweglichen Schraubenfläche des Einsatzes und der feststehenden Innenfläche der Hülse entstehen.

Somit gewährleistet diese Vorrichtung im Vergleich zu den vorbeschriebenen dank der kontiniuerlich erfolgenden Reinigung der Filterfläche vom Absatz eine längere Funktion des Extruders ohne Unterbrechung des Prozesses, wobei die zylindrische Form des Filterelementes es gestattet, die Filterfläche gegenüber einem planen Filterelement desselben Durchmessers wesentlich zu vergrössern. Andererseits besteht ein wesentlicher Vorteil dieser Vorrichtung auch in der Vereinigung der Filtrations- und Homogenisierungsprozesse, was die Qualität der Schmelze am Extruderaustritt erhöht.

Jedoch erschwert der in dieser Konstruktion der Filtervorrichtung zwischen der Filterfläche und dem Schraubengewindekamm des Schaberelementes vorhandene Spalt, der die Drehbewegung desselben ermöglicht und während des Betriebes wegen des eintretenden Verschleisses grösser wird, die Möglichkeit einer vollständigen Reinigung der Filterfläche von Fremdstoffen und beschleunigt die Ausbildung einer Absatzschicht auf derselben, die mit der Spaltgrösse vergleichbar ist, was zur Verstopfung der Löcher und Unterbrechung des Filtrationsprozesses führt. Darüber hinaus wird in dieser Vorrichtung der aus dem Sammler entfernte Absatz durch die Kanäle relativ komplizierter Form gedrückt, was die Verstopfung der Austrittskanäle selber verursacht und die Verluste an Polymer bei ihrer Spülung vergrössert. Es ist ferner wünschenswert, die Effektivität des Prozesses der Vermischung und Homogenisierung der zu verarbeitenden Schmelze zu erhöhen.

Der Erfindung liegt die Aufgabe zugrunde, eine hochleistungsfähige Filtervorrichtung zu schaffen, in der die konstruktive Ausführung des Filterelementes und die Zusammenwirkung eines Schaberelementes mit demselben es gestatten würden, bei kontinuierlicher Reinigung der Filterfläche eine längere Funktion der Extrusionsanlagen ohne Unterbrechung des technologischen Prozesses zu gewährleisten, gleichzeitig die Intensität der Vermischung und die Qualität der Schmelze am Austritt aus der Vorrichtung zu erhöhen und die Verluste an Ausgangsstoffen beim Abfluss des Absatzes zu verringern.

Diese Aufgabe ist durch die Schaffung einer Filtervorrichtung mit einer kontinuierlichen Reinigung der Filterfläche gelöst, die ein zylindrisches Gehäuse mit einer Eintrittsöffnung und einer Austrittsöffnung, die von der Eintrittsöffnung in der Bewegungsrichtung des Materials entfernt liegt, ein Filterelement, das eine Hülse mit filtrierender Seitenfläche und einem innerem Hohlraum darstellt, der mit der Austrittsöffnung in Verbindung steht, welche Hülse mit Hilfe eines auf der offenen Hülsenseite vorhandenen Flansches im Innern des Gehäuses gleichachsig mit der Längsachse desselben starr angebracht ist, sowie ein Schaberelement enthält, das mit einem Antrieb verbunden und in einem Ringraum, der zwischen der Innenfläche des Gehäuses und der filtrierenden Aussenfläche der Hülse gebildet ist, drehbar montiert ist, bei welcher Vorrichtung erfindungsgemäss das Schaberelement in Gestalt mindestens eines Spiralbandes ausgeführt ist, das die Hülse umfasst und mit der Filterfläche derselben zusammenwirkt, während zwischen der dem Schaberelement zugekehrten Flanschoberfläche und der Stirnfläche des Spiralbandes ein Ringsammler zum Sammeln des Absatzes gebildet ist, der mit der Umgebung in Verbindung steht.

Dadurch, dass die erfindungsgemässe Vorrichtung mit einem drehbaren Schaberelement ausgestattet ist, das in Gestalt mindestens eines Spiralbandes ausgeführt ist, welches die Hülse umfasst und an der Filterfläche derselben gleitet, sowie dank dem vorhandenen, mit der Umgebung in Verbindung stehenden Sammler zum Sammeln des Absatzes werden die sich an der Filterfläche absetzenden Verunreinigungen von der auflaufenden Spiralbandkante kontinuierlich abgenommen und in Richtung des Ringsammlers befördert, wo sie sich mit einem geringfügigen Teil der Schmelze ansammeln, und der sich dabei bildende Absatz wird aus der Vorrichtung periodisch abgeleitet.

Somit gewährleistet diese Filtervorrichtung eine kontinuierliche Reinigung der Filterfläche, das Ansammeln und einen periodischen Abfluss des Absatzes, wodurch eine lang andauernde Arbeit der Anlage ohne Unterbrechung des technologischen Prozesses erzielt wird.

Zugleich wird neben dem Mischeffekt, der dank der Drehung des Spiralbandes im Ringraum erzielt wird, welcher von zwei feststehenden Oberflächen - der Aussenfläche der Hülse und der Innenfläche des Gehäuses - gebildet ist, in der erfindungsgemässen Vorrichtung praktisch die gesamte durch die Filterfläche durchgedrückte Schmelze einem intensiven Schub ausgesetzt, der durch die Geschwindigkeitsdifferenz im dünnen Spalt zwischen der feststehenden Hülsenoberfläche und der an derselben gleitenden Spiralbandoberfläche bedingt ist, wodurch eine Homogenität der Polymerschmelze hinsichtlich Struktur und Temperatur erreicht wird, die eine hohe Qualität des verarbeiteten Materials am Austritt aus der Vorrichtung bedingt.

Zweckmässigerweise ist das Schaberelement mit mindestens einem Spiralband mit einer zur Windungsrichtung des die Filterfläche der Hülse umfassenden Spiralbandes entgegengesetzten Windungsrichtung ausgestattet, das konzentrisch zu diesem Band und ausserhalb desselben liegt, mit ihm kontaktiert und an den Stellen der gegenseitigen Kreuzung ihrer Windungen mit ihm starr verbunden ist.

Der Umlauf des Schaberelementes einer solchen Konstruktion bildet beim Zusammenwirken des inneren Spiralbandes mit der Filterfläche der Hülse und des äusseren Spiralbandes mit der Innenfläche des Gehäuses im von diesen Oberflächen umgrenzten Ringraum entgegengesetzt gerichtete Schmelzströme aus, die eine Zirkulationsströmung entlang der Ringraumachse erzeugen, die neben dem Vermischungseffekt, der bei intensivem Schub in kleinen Spalten zwischen den beweglichen und unbeweglichen zusammenwirkenden Oberflächen von Schaberelement, Hülse und Gehäuse erzielt wird, die Vermischung und Vergleichmässigung des Materials im gesamten Volumen des Ringraumes sowie eine Erhöhung der Qualität der Polymerschmelze am Austritt aus der Vorrichtung ohne eine erhebliche Vergrösserung des Energieaufwandes gewährleistet.

Ausserdem erzeugt die starre Verbindung von äusseren und inneren Spiralbändern an den Stellen ihrer gegenseitigen Kreuzung eine räumliche Konstruktion, die eine hohe Steifigkeit und Festigkeit besitzt, was eine zuverlässige Funktion der Vorrichtung sicherstellt.

Es ist wünschenswert, dass das Schaberelement auf der Seite der Austrittsöffnung einen Ring mit Bohrungen besitzt, der an die Stirnfläche des äusseren Spiralbandes anstösst, das innere Spiralband umfasst und mit ihnen an den Berührungsstellen starr verbunden ist, wobei der Aussen- und der Innendurchmesser des Ringes jeweils dem Aussen- bzw. dem Innendurchmesser des äusseren Spiralbandes gleich sein muss.

Der am Schaberelementende vorhandene Ring verhindert die Rückkehr des Absatzes in den Schmelzhauptstrom, trägt zur Konzentrierung der Verunreinigungen im relativ kleinen Sammlervolumen bei, das auf der Seite des Schaberelementes vom Ring mit Bohrungen begrenzt ist, reduziert Polymerverluste, die mit der Entfernung des Absatzes aus dem Gehäuse der Filtervorrichtung zusammenhängen, beträchtlich. Zugleich erzeugt die starre Befestigung der Enden des äusseren und des inneren Spiralbandes an einem gemeinsamen Tragelement - dem Ring - einen erhöhten Sicherheitsgrad der Konstruktion des Schaberelementes, der die Funktionszuverlässigkeit desselben erhöht.

Zweckmässigerweise sind die Windungsrichtung des die Filterfläche umfassenden Spiralbandes und die Umlaufrichtung des Schaberelementes, von der Seite der Austrittsöffnung her gesehen, einander gleich gewählt.

Dank der übereinstimmenden Umlaufrichtung des Schaberelementes und der Windungsrichtung des mit der Filterfläche zusammenwirkenden Spiralbandes führt der Umlauf des Schaberelementes in hochviskosen Flüssigkeiten, zu denen Polymerschmelzen gehören, eine Verdrillung des Spiralbandes um die Hülse herbei, wodurch innerhalb der Grenzen der erfolgenden elastischen Verformungen eine Kompensation des infolge des Verschleisses der Reibflächen eventuell entstehenden Spaltes gewährleistet wird. Das innige Anliegen des Spiralbandes an der Filterfläche gewährleistet ihre volle Reinigung vom Absatz ohne Unterbrechung des Filtrationsprozesses während einer langen Betriebsdauer.

Weitere Ziele und Vorteile der Erfindung sind aus nachfolgenden konkreten Ausführungsbeispielen und beiliegenden Zeichnungen begreiflich; in diesen zeigt:
Fig. 1 Filtervorrichtung mit kontinuierlicher Reinigung der Filterfläche, gemäss der Erfindung, im Längsschnitt;
Fig. 2 eine Ausführungsform der Filtervorrichtung, gemäss der Erfindung, im Längsschnitt;
Fig. 3 eine Ausführungsform des mit einem Ring mit Bohrungen versehenen Schaberelementes, gemäss der Erfindung, im Längsschnitt und vergrösserten Masstab;
Fig. 4 eine Ausführungsform des Sammlers und des zum Abfluss des Absatzes bestimmten Stutzens, im Längsschnitt und vergrösserten Masstab.

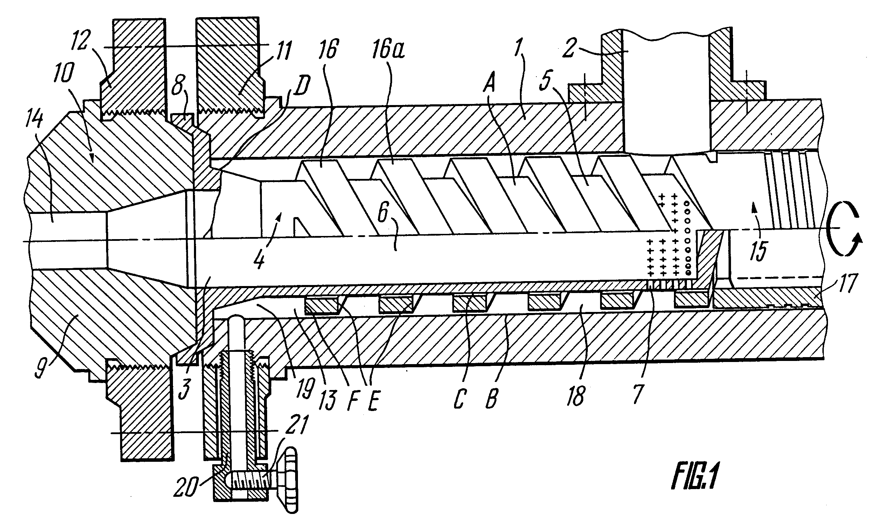

Die Filtervorrichtung mit kontinuierlicher Reinigung der Filterfläche enthält ein zylindrisches Gehäuses 1 (Fig. 1) mit einer Eintrittsöffnung 2 und einer Austrittsöffnung 3, die von der Eintrittsöffnung in der Bewegungsrichtung des Materials entfernt liegt.

Im Innern des Gehäuses 1 ist gleichachsig mit seiner Längsachse ein Filterelement 4 angeordnet, das eine Hülse 5 mit einem inneren Hohlraum 6, der mit der Austrittsöffnung 3 in Verbindung steht, und mit Löchern 7 in der filtrierenden Seitenfläche A darstellt (die Hülse kann aus einem porösen Werkstoff gefertigt sein). Die Hülse 5 ist mit Hilfe eines auf der offenen Seite derselben ausgeführten Flansches 8 zwischen den Stirnseiten des Gehäuses 1 der Filtervorrichtung und des Gehäuses 9 eines Formungskopfes 10 starr befestigt, die durch Flansche 11 und 12 miteinander verbunden sind. Die Innenfläche B des Gehäuses 1 und die filtrierende Seitenfläche A der Hülse 5 bilden einen Ringraum 13, der über die Löcher 7 in der Filterfläche A, den inneren Hohlraum 6 der Hülse 5 und die Austrittsöffnung 3 im Gehäuse 1 der Vorrichtung mit einem Kanal 14 im Formungskopf 10 verbunden ist.

Im Ringraum 13 ist ein Schaberelement 15 angeordnet, das beispielsweise zwei Spiralbänder 16 und 16a darstellt, deren Enden an einer mit einem (in Fig. nicht abgebildeten) Antrieb verbundenen Schlitzbuchse 17 befestigt sind. Die Spiralbänder 16 und 16a liegen auf dem Umfang gleichmässig verteilt (im vorliegenden Fall um 180° versetzt), umfassen die Filterfläche A und kontaktieren mit dieser über ihre Innenfläche C, während ihre Seitenflächen E gemeinsam mit den Oberflächen A, B Schraubenkanäle 18 bilden. In der in Fig. 1 abgebildeten Ausführungsform der Konstruktion des Schaberelementes 15 besitzen die Spiralbänder 16 und 16a die rechte Windungsrichtung und werden von links nach rechts im Uhrzeigersinn (von der Seite der Austrittsöffnung her gesehen) in Drehung versetzt.

Zwischen der dem Schaberelement 15 zugekehrten Oberfläche D des Flansches 8 und der Stirnfläche F der Spiralbänder 16 und 16a ist ein Ringsammler 19 zum Sammeln von Verunreinigungen gebildet, der einen Stutzen 20 zum Abfluss des Absatzes besitzt, welcher mit einer Drossel 21 versehen und mit der Umgebung des Gehäuses 1 in Verbindung gesetzt ist. In der in Fig. 1 dargestellten Ausführungsform ist der Stutzen 20 im Gehäuse 1 in einer Bohring des Flansches 11 eingesetzt.

Die Filtervorrichtung arbeitet folgenderweise. Das Material in Form einer viskosen Flüssigkeit (bzw. einer Mischung), beispielsweise eine Polymerschmelze, wird über die Eintrittsöffnung 2 im Gehäuse 1 den Schraubenkanälen 18 zugeleitet, wo infolge der Zusammenwirkung der rotierenden Spiralbänder 16 und 16a mit der Innenfläche B des Gehäuses 1 und der Filterfläche A der Hülse 5 das Material verschoben wird und im Materialstrom Schubverformungen eintreten, die zur Vermischung und Homogenisierung der Schmelze hinsichtlich Zusammensetzung und Temperatur beitragen. Bei ihrer Fortbewegung längs der Hülse 5 wird die Schmelze durch die Löcher 7 in der Filterfläche A in den inneren Hohlraum 6 und danach über die Austrittsöffnung 3 in den Kanal 14 des Formungskopfes 10 durchgedrückt. Die die Schmelze verunreinigenden Fremdeinschlüsse setzen sich an der Aussenfläche A der Hülse 5 ab und werden von den Spiralbändern 16 und 16a des Schaberelementes 5 gemeinsam mit einem Teil der Schmelze in Richtung des Ringsammlers 19 verschoben, wo sie sich ansammeln.

Beim Befördern und Durchdrücken durch die Löcher 7 in der Hülse 5 wird das gesamte Material gleichzeitig mit dem stattfindenden Filtrationsvorgang dank dem beim Fliessen im Schraubenkanal 18 und hauptsächlich im dünnen Spalt zwischen der feststehenden Filterfläche A und der an derselben gleitenden Oberfläche C der Spiralbänder 16 und 16a vermischt und homogenisiert, wodurch die Zerstörung von Strukturfehlern, eine gleichmässige Verteilung der Komponenten in der Polymerschmelze und eine hohe Temperaturhomogenität derselben gewährleistet werden.

Der Abfluss des Absatzes und die Entfernung der Fremdeinschlüsse aus dem Sammler 19 gemeinsam mit einem kleinen Teil der Schmelze erfolgt periodisch über den Stutzen 20 und die Drosselvorrichtung 21 ohne Unterbrechung des technologischen Prozesses.

Beim Umlauf des Schaberelementes 15 in der zähen Schmelze ruft der hydraulische Widerstand gegen die Drehbewegung eine Verdrillung der Spiralbänder 16 und 16a in bezug auf deren Achse hervor, und ihr Innendurchmesser nimmt ab. Dabei wird in den Grenzen der elastischen Verformungen des Schaberelementes 15 der Spalt zwischen der Innenfläche C der Spiralbänder 16 und 16a und der Filterfläche A der Hülse 5, der durch Montageanforderungen, Herstellungsungenauigkeit und Abnutzung bedingt ist, kompensiert, wodurch eine ständige Berührung des Schaberelementes 15 mit der Filterfläche A während des Betriebes erzielt und eine volle Reinigung derselben vom Absatz ohne Unterbrechung des Filtrationsprozesses während einer längeren Betriebsdauer gewährleistet wird.

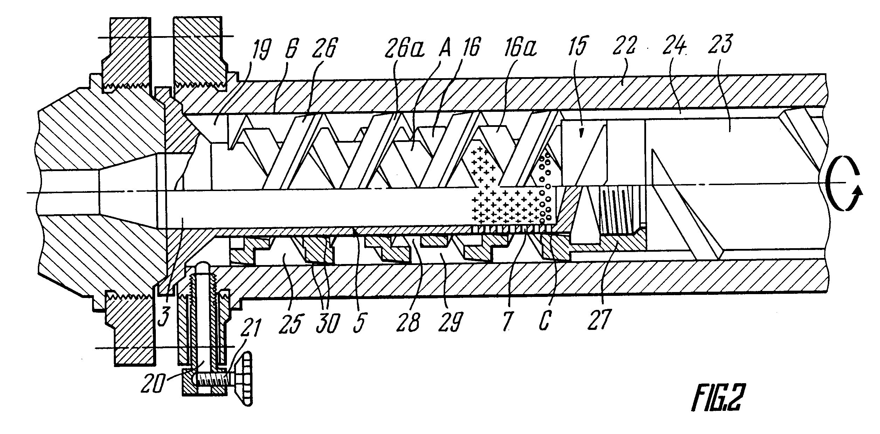

Beim Verarbeiten von granulierten Stoffen ist die Filtervorrichtung zweckmässigerweise unmittelbar im Extrudergehäuse untergebracht, wo die Vorbehandlung der Polymerschmelze stattfindet (Fig. 2). In diesem Fall ist die Vorrichtung der obenbeschriebenen ähnlich, mit dem Unterschied, dass sich das Schaberelement 15 in einem Extrudergehäuse 22 befindet, am Austrittsende einer Schnecke 23, z.B. mit Hilfe einer Gewindeverbindung, starr befestigt ist und gemeinsam mit ihr umläuft. Dabei steht der Schraubenkanal 24 der Schnecke 23 mit einem Ringraum 25 in Verbindung, der von der Filterfläche A der Hülse 5 und der Innenfläche F des Extrudergehäuses 22 gebildet ist.

In der in Fig. 2 dargestellten Ausführungsform der Vorrichtung ist das Schaberelement 15 zusätzlich mit zwei Spiralbändern 26 und 26a mit einer Windungsrichtung, die zur Richtung der die Filterfläche A der Hülse 5 umfassenden Spiralbänder 16 und 16a entgegengesetzt ist, versehen.

Die Spiralbänder 26 und 26a liegen konzentrisch zu den Spiralbändern 16 und 16a und ausserhalb derselben, kontaktieren und sind miteinander an den Kreuzungsstellen ihrer Windungen starr verbunden. Die Aussenbänder 26, 26a und die Innenbänder 16, 16a liegen auf dem Umfang gleichmässig verteilt, wobei ihre Enden auf der Seite der Schnecke 23 in einer Gewindebuchse 27 starr befestigt sind. Die inneren Spiralbänder 16 und 16a kontaktieren mit der Filterfläche A der Hülse 5 und bilden mit ihr Schraubenkanäle 28, während die äusseren Spiralbänder 26 und 26a mit der Innenfläche G des Gehäuses 22 kontaktieren und Schraubenkanäle 29 bilden.

Zur Reduzierung der Energieverluste für die Reibung in den kleinen Spalten ist an der hinteren, den zugehörigen Oberflächen G und A zugekehrten Kante des Aussenbandes 26 und des Innenbandes 16 eine Fase 30 ausgeführt.

Die Filtervorrichtung in der in Fig. 2 dargestellten Ausführungsform arbeitet auf die folgende Weise.

Das zu verarbeitende granulierte Material gelangt über eine ( nicht abgebildete) Eintrittsöffnung im Extrudergehäuse 22 in den Schraubenkanal 24 der Schnecke 23 und wird bei deren Drehung während seiner Fortbewegung zur Austrittsöffnung 3 erwärmt, plastifiziert und in eine Schmelze umgewandelt. Am Austritt aus der Schnecke 23 gelangt die Schmelze in die Schraubenkanäle 29 und 28 des Schaberelementes 15. Dabei werden dank der entgegengesetzten Richtung der inneren und äusseren Spiralbänder 16, 16a; 26 und 26a, die mit der filtrierenden Seitenfläche A der Hülse 5 und der Innenfläche G des Extrudergehäuses zusammenwirken, im von diesen Oberflächen umgrenzten Ringraum 25 entgegengesetzt gerichtete Schmelzströme ausgebildet, die eine Zirkulationsströmung entlang der Längsachse erzeugen, welche eine intensive Vermischung und Vergleichmässigung des Materials im gesamten Volumen dieses Raumes gewährleistet. Gleichzeitig wird die Polymerschmelze durch die Löcher 7 in der Hülse 5 durchgedrückt und, indem sie in den Spalt zwischen der Filterfläche A und der Oberfläche C der Spiralbänder 16 und 16a gelangt, einem intensiven Schub im kleinen Spalt ausgesetzt, wodurch ein hoher Homogenisierungsgrad der Polymerschmelze erreicht wird. Die Fremdeinschlüsse, die die Schmelze verunreinigen und die Grösse der Filterlöcher 7 übersteigen, setzen sich an der Filterfläche A der Hülse 5 ab und werden von den Windungen der Spiralbänder 16 und 16a zum Sammler 19 befördert, von wo der Absatz über den Stutzen 20 und die Drosselvorrichtung 21 in periodischen Zeitabständen zum Abfluss gelangt.

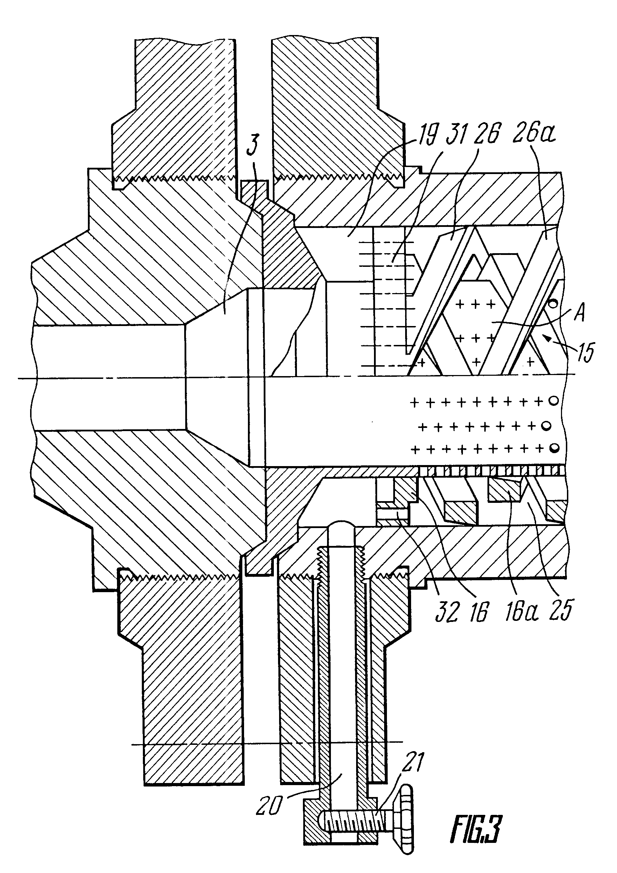

In Fig. 3 ist eine Abwandlung der Filtervorrichtung dargestellt.

In diesem Fall ist die Filtervorrichtung der vorbeschriebenen ähnlich, mit dem Unterschied, dass das Schaberelement 15 auf der Seite der Austrittsöffnung 3 einen Ring 31 mit Bohrungen 32 besitzt, der an die Stirnfläche der Spiralbänder 26 und 26a anstösst, die inneren Spiralbänder 16 und 16a umfasst und mit ihnen an den Berührungsstellen starr verbunden ist, wobei der Aussen- und der Innendurchmesser des Ringes jeweils dem Aussen- und dem Innendurchmesser der äusseren Spiralbänder 26 und 26a gleich ist.

In der in Fig. 3 dargestellten Ausführungsform arbeitet die Filtervorrichtung ähnlich der vorbeschriebenen Filtervorrichtung.

Beim Reinigen der Filterfläche A verschieben die Spiralbänder 16 und 16a gemeinsam mit den Verunreinigungen auch eine gewisse Schmelzmenge. Der im Ringraum 25 von den äusseren und inneren Spiralbändern 16 und 26 bewirkte, in Längsrichtung fliessende Zirkulationsstrom erzeugt am Ring 31 ein Druckgefälle, dank dem die in den Sammler 19 gemeinsam mit den Verunreinigungen gelangende Schmelze durch die Bohrungen 32 durchgedrückt, von den Verunreinigungen getrennt und in den Hauptstrom zurückgeführt wird. Somit findet im relativ kleinen, auf der Seite des Schaberelementes 15 vom Ring 31 begrenzten Volumen des Sammlers 19 eine Konzentrierung des Absatzes statt, der aus dem Sammler 19 über den Stutzen 20 periodisch abgeleitet wird.

Der am Austrittsende des Schaberelementes 15 ausgeführte Ring 31 verhindert die Rückkehr des Absatzes in den Hauptstrom der Schmelze, verringert die Wahrscheinlichkeit des Eindringens von Verunreinigungen in die abgefilterte Schmelze und erhöht somit die Qualität des verarbeiteten Materials. Andererseits setzt die Konzenttrierung des Absatzes im relativ kleinen Volumen des Sammlers 19 die mit der Entfernung des Absatzes aus der Vorrichtung zusammenhängenden Polymerverluste beträchtlich herab.

Die starre Befestigung der inneren und äusseren Spiralbänder 16, 16a, 26 und 26a mit der entgegengesetzten Windungsrichtung an den Stellen ihrer gegenseitigen Kreuzung und die Befestigung der Enden der Spiralbänder 16, 16a, 26 und 26a an einem gemeinsamen Tragelement - dem Ring 31 mit Bohrungen 32 - gewährleistet einen Sicherheitsgrad für die Konstruktion des Schaberelementes 15, der eine hohe Betriebszuverlässigkeit der Vorrichtung sicherstellt.

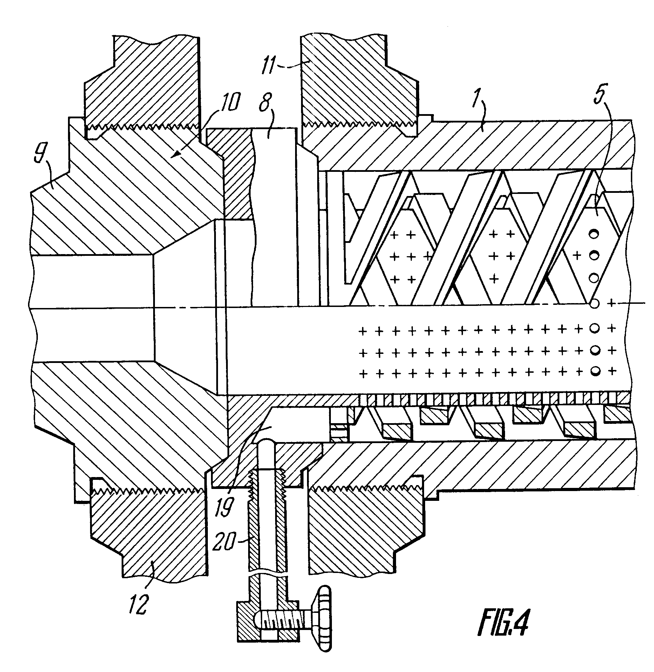

In Fig. 4 ist eine Ausführungsform der Hülse 5 dargestellt, in der der Stutzen 20 zum Abfluss des Absatzes im Flansch 8 angeordnet ist, der zwischen den Stirnseiten des Gehäuses 1 des Extruders 22 und des Gehäuses 9 des Formungskopfes 10 befestigt ist.

Diese Ausführungsform ist beim Modernisieren vorhandener Extrusionsanlagen bevorzugt, weil sie es gestattet, die Filtervorrichtung ohne wesentliche Umänderungen des Extruders einzubauen.

Die Funktion der Vorrichtung von Fig. 4 ist der Funktion der vorbeschriebenen Vorrichtung von Fig. 1, 2, 3 ähnlich. Der Unterschied besteht darin, dass der Abfluss des Absatzes aus dem Sammler 19 über den Stutzen 20 in den Raum zwischen den Flanschen 11 und 12 erfolgt.

Bei den in Fig. 2, 3, und 4 dargestellten Ausführungsformen besitzt das Schaberelement zwei innere Spiralbänder und zwei äussere Spiralbänder mit rechter und linker Windungsrichtung. Je nach den an die Homogenisierfähigkeit der Vorrichtung gestellten Anforderungen und zur Gewährleistung der erforderlichen Festigkeit und Steifigkeit des Schaberelementes kann die optimale Zahl der inneren und äusseren Spiralbänder von zwei bis vier betragen.

Die vorgeschlagene Misch- und Filtervorrichtung, die durch die Vereinigung von Filtrations- und Vermischungsprozessen gekennzeichnet ist, was hohen Anforderungen an die Qualität des verarbeiteten Materials zu genügen erlaubt, weist gegenüber der bekannten eine Reihe von wesentlichen Vorteilen auf.

Die Konstruktion des Schaberelementes, das in Form von Spiralbändern ausgeführt ist, die die Filterfläche der Hülse umfassen, der vorhandene Sammler zum Sammeln von Verunreinigungen, der mit einem Stutzen zum Abfluss des Absatzes ausgestattet ist, ermöglichen es, eine kontinuierliche Reinigung der Filterfläche ohne Unterbrechung des technologischen Prozesses während einer längeren Betriebsdauer auszuführen.

Dabei gewährleistet die Windungsrichtung der Spiralbänder und die Umlaufrichtung des Schaberelementes dank den entstehenden Torsionskräften ein inniges Anliegen des Schaberelementes an der Filterfläche und eine vollkommene Reinigung derselben vom Absatz, wodurch eine hohe Betriebszuverlässigkeit und -dauer des Filters erzielt wird sowie Stillstandszeiten verkürzt werden, die mit dem Auswechseln der Filterelemente zusammenhängen.

Die Konzentrierung des Absatzes in einem relativ kleinen, von einem Ring begrenzten Ringsammlervolumen reduziert wesentlich die mit der Ableitung des Absatzes aus der Vorrichtung zusammenhängenden Materialverluste.

Zugleich besitzt die Filtervorrichtung eine hohe Mischleistung, die durch einen intensiven Schub im dünnen Spalt zwischen den zusammenwirkenden Oberflächen der Spiralbänder und der Hülsenoberfläche erreicht wird, welcher Schub im gesamten zu verarbeitenden Material zur Wirkung gelangt. Dabei erzeugt die Ausführung des Schaberelementes in Gestalt von konzentrisch liegenden Spiralen mit entgegengesetzter Windungsrichtung einen längsfliessenden Zirkulationsstrom, der die Vermischung und eine hohe Homogenität des Materials gewährleistet, die zur Durchführung von Färbeprozessen in diesen Vorrichtungen, zur Gewinnung von konzentrierten Farbstoffen ausreichend ist.

Die erfindungsgemässe Misch- und Filtervorrichtung besitzt geringe Abmessungen und eine geringe Metallintensität, ist bequem zu bedienen und zuverlässig im Betrieb.

Die erfindungsgemässe Filtervorrichtung mit kontinuierlicher Reinigung der Filterfläche findet eine breite Anwendung in Fliesstrassen zur Herstellung von Kunststofferzeugnissen (Rohren, Filmen, Platten usw.), wobei die Erzeugung von qualitativ hochwertigen Erzeugnissen aus Werkstoffen unter Hinzufügung von Sekundärrohstoffen gewährleistet wird. So gestattete beispielsweise die Anwendung der Filtervorrichtung in einer Strasse zur Herstellung von Schlauchfolien auf der Basis eines Extruders mit einem Schneckendurchmesser von 90 mm bei einem Schlauchdurchmesser von 1500 mm und einer Folienstärke von 100 µm aus Polyäthylen niedriger Dichte unter Zugabe von 20% technologischen Abfällen, den kontinuierlichen Betrieb der Strasse ohne Unterbrechung des Prozesses im Laufe von 6 Monaten sicherzustellen und die tatsätzliche Arbeitsleistung der Anlage um mehr als das 1,5fache zu erhöhen.

## Patentansprüche

1. Filtervorrichtung mit kontinuierlicher Reinigung der Filterfläche, die ein zylindrisches Gehäuse (1) mit einer Eintrittsöffnung (2) und einer Austrittsöffnung (3), die von der Eintrittsöffnung in der Bewegungsrichtung des Materials entfernt liegt, ein Filterelement (4), das eine Hülse (5) mit einer filtrierenden Seitenfläche (A) und einem inneren Hohlraum (6) darstellt, der mit der Austrittsöffnung (3) in Verbindung steht, welche Hülse (5) mit Hilfe eines auf der offenen Seite der Hülse (5) vorhandenen Flansches (8) im Innern des Gehäuses (1) gleichachsig mit der Längsachse desselben starr angebracht ist, sowie ein Schaberelement (5) enthält, das mit einem Antrieb verbunden und in einem Ringraum (13), der zwischen der Innenfläche (B) des Gehäuses (1) und der filtrierenden Aussenfläche (A) der Hülse (5) gebildet ist, drehbar montiert ist, dadurch **gekennzeichnet**, dass das Schaberelement (15) in Gestalt mindestens eines Spiralbandes (16) ausgeführt ist, das die Hülse (5) umfasst und mit der Filterfläche (A) derselben zusammenwirkt, während zwischen der dem Schaberelement (15) zugekehrten Oberfläche (D) des Flansches (8) und der Stirnfläche (F) des Spiralbandes (16) ein Ringsammler (19) zum Sammeln des Absatzes gebildet ist, der mit der Umgebung verbindbar ist.

2. Filtervorrichtung mit kontinuierlicher Reinigung der Filterfläche nach Anspruch 1, dadurch **gekennzeichnet**, dass das Schaberelement (5) mit mindestens einem Spiralband (26) mit einer zur Windungsrichtung des die Filterfläche (A) der Hülse (5) umfassenden Spiralbandes (16) entgegengesetzten Windungsrichtung ausgestattet ist, das konzentrisch zu diesem Spiralband (16) und ausserhalb desselben liegt, mit ihm kontaktiert und an den Stellen der gegenseitigen Kreuzung ihrer Windungen mit ihm starr verbunden ist.

3. Filtervorrichtung mit kontinuierlicher Reinigung der Filterfläche nach Anspruch 2, dadurch **gekennzeichnet**, dass das Schaberelement (5) auf der Seite der Austrittsöffnung (3) einen Ring (31) mit Bohrungen (32) besitzt, der an die Stirnfläche des äusseren Spiralbandes (26) anstösst, das innere Spiralband (16) umfasst und mit ihnen an den Berührungsstellen starr verbunden ist, wobei der Aussen- und der Innendurchmesser des Ringes (31) jeweils dem Aussen- und dem Innendurchmesser des äusseren Spiralbandes (26) gleich ist.

4. Filtervorrichtung mit kontinuierlicher Reinigung der Filterfläche nach Anspruch 1, dadurch **gekennzeichnet**, das die Windungsrichtung des die Filterfläche (A) umfassenden Spiralbandes und die Umlaufrichtung des Schaberelementes (15) von der Seite der Austrittsbohrung (3) her gesehen, einander gleich gewählt sind.

## Claims

1. An arrangement for filtering materials with continuous cleaning of the filtering surface comprising a cylindrical housing (1) having an inlet port (2) and an outlet port (3) remote from the inlet port (2) downstream of the travel path of the material being filtered, a filtering element (4) in the form of a cup (5) with a side filtering surface (A) and an interior (6) communicating with the outlet port (3), this cup (5) being rigidly secured inside the housing (1) in line with its longitudinal axis by means of a flange (8) positioned at the open side of the cup (5), the filtering element (4) being rigidly secured inside the housing (1) in line with its axis, and a rotatable scraping member (15) connected to its drive and mounted in an annular space (13) defined between the interior (B) of the housing (1) and outer filtering surface (A) of the cup (5), CHARACTERIZED in that the scraping element (15) has the form of at least one spiral band (16) embracing the cup (5) and engaging with its filtering surface (A), whereas defined between the surface (D) of the flange (8) facing the scraping member (15) and end face (F) of the spiral band (16) is an annular header (19) for collecting filter cake communicating with the outside.

2. A filtering arrangement as claimed in claim 1, CHARACTERIZED in that the scraping member (15) has at least one spiral band (26) with coil direction opposite to the direction of coils of the spiral band (16) embracing the filtering surface (A) of the cup (5), this spiral band (26) being positioned concentrically outside of the band (16), engaging therewith, and rigidly connected thereto at points of mutual intersection of their coils.

3. A filtering arrangement as claimed in claim 2, CHARACTERIZED in that the scraping member (15) has at the side of the outlet port (3) a ring element (31) with holes (32), this ring element (31) adjoining the end face of the outer spiral band (26), embracing the inner spiral band (16), and rigidly connected thereto at points of contact, the outside and inside diameters of the ring element (31) equalling, respectively, the outside and inside diameters of the outer spiral band (26).

4. A filtering arrangement as claimed in claim 1, CHARACTERIZED in that the direction of coils of the spiral band (16) embracing the filtering surface (A) and the direction of rotation of the scraping member (15) viewed at the side of the outlet port (3) are the same.

## Revendications

1. Dispositif de filtration, dont la surface filtrante est nettoyée en continu, comportant un corps cylindrique (1) avec un trou d'entrée (2) et un trou de sortie (3), éloigné du trou d'entrée suivant la direction du déplacement du matériau, un élément filtrant (4), constitué par un boîtier (5) ayant une surface filtrante latérale (A) et une cavité intérieure (6), mise en communication avec le trou de sortie (3), l'élément filtrant étant installé rigidement à l'aide d'une bride (8), prévue du côté ouvert du boîtier (5), à l'intérieur du corps (1) coaxialement à son axe longitudinal, et un élément racloir (15) lié à une commande et monté dans l'espacement annulaire (13), formé entre la surface intérieure (8) du corps (1) et la surface filtrante extérieure (A) du boîtier (5) de façon à pouvoir tourner, **caractérisé** en ce que l'élément racloir (15) est constitué au moins par une bande en spirale (16) entourant le boîtier (5) et coopérant avec sa surface filtrante (A) et en ce qu'un collecteur annulaire (19) est formé entre la surface (D) de la bride (8) orientée vers l'élément racloir (15) et la surface en bout (F) de la bande en spirale (16) pour la collecte du dépôt communicant avec l'espace environnant.

2. Dispositif de filtration, dont la surface filtrante est nettoyée en continu, selon la revendication 1, **caractérisé** en ce que l'élément racloir (15) est muni au moins d'une bande en spirale (26), dont les spires sont orientées dans le sens opposé au sens des spires de la bande en spirale (16) entourant la surface filtrante (A) du boîtier (5) et qui est disposée concentriquement et à l'extérieur par rapport à ladite bande (16), qui entre en contact avec la bande (26) et est liée à celle-ci rigidement aux endroits de l'intersection de leurs spires.

3. Dispositif de filtration dont la surface filtrante est nettoyée en continu selon la revendication 2, **caractérisé** en ce que du côté du trou de sortie (3) l'élément racloir (15) est muni d'une bague (31) avec des trous (32) qui s'applique à la face extrême de la bande en spirale extérieure (26), entoure la bande en spirale intérieure (16) et est liée rigidement auxdites bandes aux endroits du contact, en ce que les diamètres extérieur et intérieur de la bague (31) sont égaux aux diamètres extérieur et intérieur de la bande en spirale (26).

4. Dispositif de filtration dont la surface filtrante est nettoyée en continu selon la revendication 1, **caractérisé** en ce que la direction des spires de la bande en spirale (16) entourant la surface filtrante (A) et la direction de la rotation de l'élément racloir (15), déterminé du côté du trou de sortie (3) sont choisies identiques.
